# FASCICULE DE BREVET EUROPEEN

(11) **EP 4 392 295 B1**
(45) Date de publication et mention de la délivrance du brevet: **03.09.2025**
(21) Numéro de dépôt: 22744488.2
(22) Date de dépôt: 21.07.2022
(51) Int. Cl.: B60R 22/26, B60N 2/68, B60R 21/207, B60R 21/231, B60R 21/2338

(54) **SIÈGE DE VÉHICULE DOTÉ D'UN SYSTÈME DE SÉCURITÉ EMBARQUÉ**
FAHRZEUGSITZ MIT EINGEBAUTEM SICHERHEITSSYSTEM
VEHICLE SEAT PROVIDED WITH AN INSTALLED SAFETY SYSTEM

(30) Priorité: 26.08.2021 FR 2108954
(43) Date de publication de la demande: 03.07.2024
(73) Titulaire: Nissan Motor Co. Ltd, Yokohama-Shi, Kanagawa 221-0023 (JP)
(72) Inventeur: LESARTRE, François, 78280 GUYANCOURT (FR); RENAUD, Nicolas, 78280 GUYANCOURT (FR); ROY, Jean-Baptiste, 78280 Guyancourt (FR); SOUVILLE, Philippe, 78280 Guyancourt (FR)
(74) Mandataire: Renault Group
(86) Numéro de dépôt international: PCT/EP2022/070555
(87) Numéro de publication internationale: WO 2023/025482

(56) Documents cités:
- WO-A1-2021/111748
- JP-A- 2007 276 514

## Description

L'invention se rapporte à un siège de véhicule doté d'un système de sécurité embarqué.

Afin de simplifier la rédaction, il est toujours supposé que le déploiement de l'airbag ne se produit que dans le cas d'un choc accidentel du véhicule contre un obstacle extérieur, pouvant par exemple être un autre véhicule. Il ne sera donc pas spécifié à chaque fois que le déploiement de l'airbag n'intervient qu'après un choc du véhicule.

Afin de bien comprendre le positionnement des différentes pièces impliquées dans un siège selon l'invention, la description est réalisée en supposant que le siège est placé dans un véhicule et en faisant référence à un repère orthonormé direct XYZ lié audit véhicule et dans lequel X est un axe longitudinal avant-arrière du véhicule orienté vers l'arrière, Y est un axe transversal orienté vers la droite du véhicule et Z est un axe vertical dirigé vers le haut.

Actuellement, l'airbag frontal placé dans la planche de bord juste devant le siège passager est très contraignant car il occupe une place importante au sein de ladite planche de bord.

Une solution permettant de régler ce problème de place, consiste à transférer directement et totalement cet airbag dans le siège passager. Or, un tel transfert nécessite que le nouvel airbag placé dans ledit siège :
- présente des caractéristiques de protection au moins équivalentes à celles de l'ancien airbag passager placé dans la planche de bord,
- soit monté de façon précise et rigoureuse dans le siège passager afin qu'il puisse se déployer de façon fluide dans la configuration souhaitée, sans qu'un élément déjà présent dans ledit siège n'entrave ou n'empêche le déploiement de ce nouvel airbag.

Certains sièges existants comportent déjà des airbags simples placés de chaque côté du siège en complément de celui disposé dans la planche de bord, avec donc une performance complémentaire à celle de l'airbag disposé dans la planche de bord. Or, ces airbags nécessitent d'avoir un positionnement du siège prédéterminé par rapport à la planche de bord, ce qui est une contrainte dans le cas de véhicules autonomes, pour lesquels les sièges des occupants passagers sont amenés à se déplacer ou à pivoter avec une grande amplitude.

Afin de rendre ces sièges totalement autonomes en matière de sécurité, dans le cadre par exemple de véhicules autonomes, un système de ceinture de sécurité est complètement intégré à ceux-ci. Or, une intégration complète d'une ceinture de sécurité et d'un système d'airbag complet et sophistiqué dans de tels sièges est compliquée, car la ceinture de sécurité ne doit pas interférer défavorablement avec le système d'airbag au risque de perturber ou même d'empêcher le déploiement de celui-ci lors d'un choc accidentel du véhicule contre un obstacle extérieur.

Le document WO 2021/111748 A1 divulgue un siège de véhicule comprenant une structure de dossier, une structure d'assise possédant une bosse anti sous-marinage, et un airbag possédant deux composantes placées sur les côtés dudit siège de part et d'autre d'un individu qui serait assis sur celui-ci, en ce que :- chaque composante de l'airbag comprend un sac gonflable et au moins une sangle cousue audit sac, ladite composante étant apte à se déployer vers l'avant du siège dans le cas d'un choc du véhicule, de sorte que lesdites composantes soient amenées à entourer complètement l'individu,-ladite au moins une sangle de chaque composante présente un point de fixation haut à une zone supérieure de la structure de dossier et un point de fixation bas à la bosse anti sous-marinage de la structure d'assise et ladite au moins une sangle de chaque composante cheminant le long d'un côté de la structure de dossier et le long d'un côté de la structure d'assise.

Un siège selon l'invention comprend un airbag performant capable de protéger efficacement un individu qui serait assis sur ledit siège dans le cas d'un choc du véhicule contre un obstacle extérieur, et un système de ceinture de sécurité tout aussi efficace vis-à-vis de cet individu, ledit airbag et ledit système de ceinture de sécurité étant complètement intégrés dans ledit siège sans interférer l'un avec l'autre au point de dénaturer mutuellement leur fonction.

L'invention a pour objet un siège de véhicule comprenant une structure de dossier, une structure d'assise possédant une bosse anti sous-marinage, et un airbag possédant deux composantes placées sur les côtés dudit siège de part et d'autre d'un individu qui serait assis sur celui-ci.

Selon l'invention,
- chaque composante de l'airbag comprend un sac gonflable et au moins une sangle cousue audit sac, ladite composante étant apte à se déployer vers l'avant du siège dans le cas d'un choc du véhicule, de sorte que lesdites composantes soient amenées à entourer complètement l'individu,
- ladite au moins une sangle de chaque composante présente un point de fixation haut à une zone supérieure de la structure de dossier et un point de fixation bas à la bosse anti sous-marinage de la structure d'assise, et ladite au moins une sangle de chaque composante cheminant le long d'un côté de la structure de dossier et le long d'un côté de la structure d'assise,
- la structure de dossier comprend un coussin et une coque rigide enserrant ledit coussin en étant ouverte sur l'avant, de sorte que ladite au moins une sangle de chaque composante passe sur un côté de la structure de dossier entre ledit coussin et ladite coque rigide, le siège comprenant une ceinture de sécurité entièrement intégrée à celui-ci et dotée d'un enrouleur fixé sur la structure du dossier et placé à l'intérieur d'un logement délimité par un carter avant situé dans une zone supérieure de ladite structure de dossier, la coque rigide recouvrant au moins partiellement ledit carter avant en ménageant entre eux un espace pour permettre le passage de la dite au moins une sangle de l'une des deux composantes dans la zone supérieure de la structure de dossier, ladite coque délimitant à l'arrière ledit logement..

L'airbag mis en œuvre dans un siège selon l'invention comprend deux composantes disposées de part et d'autre d'un individu qui serait assis sur ledit siège, lesdites deux composantes étant amenées à se déployer chacune vers l'avant dans le cas d'un choc du véhicule pour venir envelopper complètement cet individu. La particularité de cet airbag est que chacune de ses composantes comprend un sac gonflable et au moins une sangle cousue à ce sac, ladite au moins une sangle permettant :
- d'ancrer la composante de l'airbag dans le siège avec un point de fixation haut dans une zone supérieure du dossier et avec un point de fixation bas dans une bosse anti sous-marinage de l'assise,
- guider le déploiement du sac gonflable sur le siège afin que celui-ci assure une bonne protection de l'individu qui serait assis sur ledit siège.

La coque rigide enserrant une partie du dossier permet de retenir contre le coussin, ladite au moins une sangle de chaque composante de l'airbag, et permet également à l'airbag en phase de gonflage de se déployer vers l'avant du dossier pour que les deux composantes de l'airbag puissent venir envelopper entièrement un individu qui serait assis dur ledit siège.

L'autre particularité d'un siège selon l'invention est qu'il comprend une ceinture de sécurité qui est complètement intégrée dans celui-ci, et qui comprend un enrouleur destiné à tendre la ceinture de sécurité lors d'un choc du véhicule contre un obstacle extérieur.

La coque du dossier s'étend jusqu'au carter de la ceinture de sécurité renfermant l'enrouleur en le recouvrant au moins partiellement. Cette coque vient se placer autour dudit carter, en ménageant avec celui-ci un espace pour le passage de ladite au moins une sangle de l'une des deux composantes de l'airbag. Ladite au moins une sangle vient donc se placer autour du carter logeant l'enrouleur. De cette manière, dans le cas d'un accident du véhicule, ladite au moins une sangle pourra se déployer vers l'avant du siège simultanément avec le sac en phase de gonflage, sans être perturbée par la présence de l'enrouleur. De même, en étant placée au-dessus du carter logeant l'enrouleur de ceinture, ladite au moins une sangle n'empêchera pas la ceinture de sécurité d'exercer sa fonction de retenue sur ledit siège.

Pour résumer, le principe d'un siège selon l'invention est qu'il comprend :
- un airbag entièrement intégré et particulièrement performant en étant apte à envelopper complètement un passager qui serait assis sur ledit siège dans le cas d'un accident, et
- un système de ceinture de sécurité également entièrement intégré.

Ces deux éléments de sécurité sont montés dans ledit siège de manière à ne pas interférer entre eux et à ne pas perturber la fonction de l'autre élément.

Selon une caractéristique possible de l'invention, la coque comprend une paroi arrière destinée à venir se placer contre une surface arrière du coussin, deux bords latéraux destinés à venir se placer contre deux bords latéraux du coussin en enserrant ladite au moins une sangle de chaque composante et un bord supérieur destiné à venir se placer sur le carter avant enfermant l'enrouleur de la ceinture de sécurité, créant un passage pour ladite au moins une sangle de l'une des deux composantes dans la zone supérieure de la structure de dossier. Cette coque permet d'une part, de recouvrir sur les côtés du dossier et dans une zone supérieure de celui-ci ladite au moins une sangle de chaque composante de l'airbag malgré la présence du carter avant logeant l'enrouleur de ceinture, et d'autre part, d'assurer le déploiement desdites sangles vers l'avant lorsque le sac de l'airbag est en phase de gonflage. La coque a également pour vocation de recouvrir entièrement ladite au moins une sangle de chaque composante de l'airbag, pour améliorer le rendu visuel du siège.

Selon une caractéristique possible de l'invention, le carter avant de ceinture de sécurité comprend une rainure destinée au passage de ladite au moins une sangle de l'une des deux composantes, la coque comprenant un segment plan recouvrant ladite rainure dans laquelle est placée ladite au moins une sangle. Cette rainure permet de maintenir ladite au moins une sangle sur le carter avant, en limitant les possibilités de glissement de ladite au moins une sangle sur celui-ci.

Selon une caractéristique possible de l'invention, la largeur de la rainure est légèrement supérieure à celle de ladite au moins une sangle de sorte que ladite au moins une sangle est placée dans ladite rainure en induisant un minimum de jeu. De cette manière, la rainure assure une bonne fonction de maintien de ladite au moins une sangle de l'une des composantes de l'airbag, tout en permettant à ladite sangle de pouvoir bouger dans celle-ci. La sangle n'est ainsi pas coincée dans la rainure et peut se déployer facilement lors d'un accident du véhicule. Un minimum de jeu signifie un jeu de quelques millimètres pouvant atteindre 1cm.

Selon une caractéristique possible de l'invention, le dossier comprend une surface principale, contre laquelle est destinée à venir en appui le dos d'un occupant, et deux montants latéraux bordant ladite surface principale et destinés à maintenir latéralement le dos de cet occupant, le carter avant se situant dans une zone supérieure de l'un des deux montants latéraux. Ce carter avant est excentré sur le siège et ne risque donc pas de venir en appui contre un individu qui serait assis sur ledit siège. Cet individu ne sera pas incommodé par la présence de ce carter avant, et pourra donc facilement manipuler le brin de la ceinture de sécurité sortant de ce carter.

Selon une caractéristique possible de l'invention, le montant latéral dans lequel est situé le carter avant a été préalablement raccourci de sorte que la longueur totale dudit montant et dudit carter avant est égale à la longueur totale de l'autre montant. De cette manière, le carter ne crée pas une protubérance, qui serait susceptible de gêner un individu qui serait assis sur le siège, et qui dégraderait l'esthétique du véhicule. Le siège doté du boitier présente ainsi une symétrie visuelle, ne laissant pas deviner qu'il comprend un enrouleur électrique.

Selon une caractéristique possible de l'invention, le carter avant possède une face avant possédant une ouverture pour permettre à un brin de la ceinture de sécurité de sortir dudit carter avant vers l'avant.

Selon une caractéristique possible de l'invention, l'ouverture se présente sous la forme d'une croix, comprenant une fente dont la longueur est supérieure à la largeur du brin de ceinture de sécurité émergeant du carter avant pour permettre audit brin d'émerger de ladite fente. Une fente est une ouverture discrète et peu voyante, ne laissant que peu de jeu avec le brin de la ceinture de sécurité passant par celle-ci. De cette manière, le carter avant ne sera pas facilement encrassé par des poussières extérieures au siège. La croix comprend une fente secondaire verticale débouchant dans la fente, pour permettre d'insérer la ceinture de sécurité dans le carter lors du montage du siège.

Selon une caractéristique possible de l'invention, le carter avant est fermé de sorte que l'enrouleur motorisé de la ceinture de sécurité ne soit pas visible depuis l'extérieur du siège. L'expression « le carter est fermé » signifie qu'il ne possède aucune autre ouverture que celle formée par la croix.

L'invention a pour autre objet un véhicule comprenant au moins un siège conforme à l'invention.

Un siège de véhicule selon l'invention présente l'avantage de posséder un airbag enveloppant, destiné à assurer de façon pleinement efficace et autosuffisante la sécurité d'un passager qui serait assis sur ledit siège, sans avoir subi une restructuration en profondeur. En effet, un montage judicieux de l'airbag sur le siège au moyen d'un nombre de pièces restreint et de conception simple, suffit à rendre ledit siège particulièrement performant en matière de sécurité. Il en résulte qu'un siège selon l'invention peut autoriser la réutilisation de pièces existantes, sans nécessiter des modifications en profondeur dudit siège. Un siège selon l'invention a de plus l'avantage d'intégrer complètement une ceinture de sécurité, dont le montage particulier empêche ladite ceinture d'interférer avec les composantes de l'airbag. Autrement dit, l'airbag et la ceinture de sécurité n'interfèrent pas et n'exercent aucune influence négative mutuelle. Un siège selon l'invention est particulièrement mais non exclusivement adapté à un véhicule autonome, car il embarque avec lui, tous les éléments de sécurité permettant la sauvegarde d'un passager qui serait assis sur ledit siège.

On donne ci-après une description détaillée d'un mode de réalisation préféré d'un siège selon l'invention, en se référant aux figures suivantes :
[Fig. 1] représente une vue en perspective d'un siège selon l'invention,
[Fig. 2] représente une vue en perspective d'un airbag d'un siège selon l'invention, dans une configuration déployée sur le siège,
[Fig. 3] représente une vue en perspective de la structure du siège de la figure 1,
[Fig. 4] représente une vue partielle en perspective d'une structure d'assise d'un siège selon l'invention,
[Fig. 5] représente une vue en perspective en éclaté d'un carter interne et d'un carter externe d'une structure d'assise d'un siège selon l'invention,
[Fig. 6] représente une vue partielle en perspective et sous un autre angle de la structure d'assise de la figure 4,
[Fig. 7] représente une vue partielle en perspective d'une structure d'assise d'un siège selon l'invention, montrant un fil de renvoi d'angle pour une sangle de l'airbag,
[Fig. 8] représente une vue de côté d'une structure d'assise d'un siège selon l'invention, comprenant une poignée de commande de l'inclinaison du dossier,
[Fig. 9] représente une vue en perspective en éclaté d'un dossier d'un siège selon l'invention,
[Fig. 10] représente une vue en perspective du dossier assemblé de la figure 9,
[Fig. 11] représente une vue en perspective d'une zone latérale d'un dossier d'un siège selon l'invention,
[Fig. 12] représente une vue de côté d'un siège selon l'invention montrant le positionnement d'une sangle d'airbag le long d'un côté dudit siège,
[Fig. 13] représente une vue de côté d'une zone supérieure d'un dossier d'un siège selon l'invention,
[Fig. 14] représente une vue en coupe simplifiée de la zone supérieure de la figure 10 suivant un premier plan de coupe,
[Fig. 15] représente une vue en coupe simplifiée de la zone supérieure de la figure 10 suivant un deuxième plan de coupe,
[Fig. 16] représente une vue en perspective d'une façade avant d'un siège selon l'invention montrant le boitier logeant un enrouleur électrique,
[Fig. 17] représente une vue de face du siège de la figure 13,
[Fig. 18] représente une vue de face du dossier d'un siège selon l'invention,
[Fig. 19] représente une vue en perspective et en transparence d'une zone supérieure d'un dossier de siège selon l'invention, montrant un enrouleur électrique d'une ceinture de sécurité,
[Fig. 20] représente une vue de face d'une zone supérieure d'un dossier d'un siège selon l'invention montrant une face avant d'un boitier destiné à loger un enrouleur électrique de ceinture de sécurité.

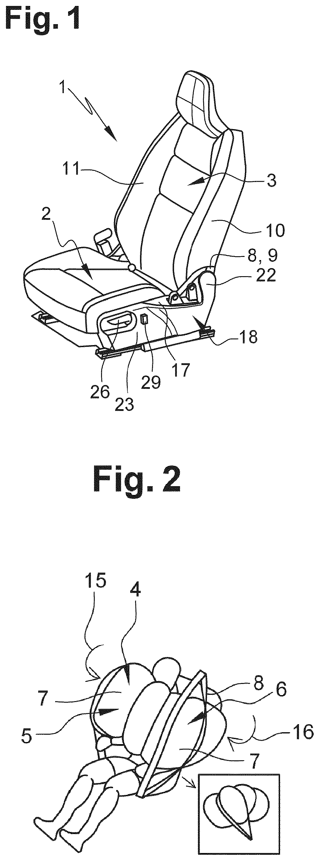

En se référant à la figure 1, un siège 1 selon l'invention est préférentiellement un siège passager comprenant classiquement une assise 2 dotée d'une structure et un dossier 3 également doté d'une structure.

En se référant à la figure 2, une première particularité d'un tel siège 1 est qu'il intègre un airbag 4, destiné à remplacer l'airbag passager habituellement logé dans une planche de bord du véhicule, juste devant le siège passager. Schématiquement cet airbag 4 comprend deux composantes 5, 6 séparées, comportant chacune un sac gonflable 7 et deux sangles 8, 9 cousues à ce sac gonflable 7. Les deux composantes 5, 6 de cet airbag 4 sont rangées dans le siège 1, de chaque côté 10, 11 de celui-ci, de sorte qu'elles se retrouvent placées de part et d'autre d'un individu qui serait assis sur ledit siège 1. Autrement dit, ces deux composantes 5, 6 encadrent un individu qui serait assis sur ledit siège 1 et sont alignées suivant un axe transversal Y du véhicule dans lequel serait monté ledit siège 1. Ces deux composantes 5, 6 étant sensiblement identiques, nous ne décrirons pour la suite de la description, qu'une seule de ces composantes 5, 6.

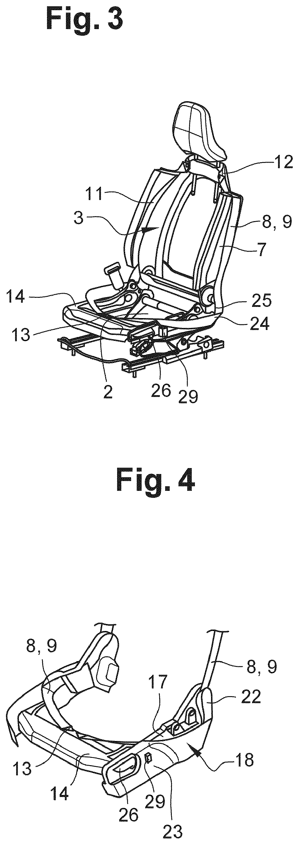

En se référant à la figure 3, lorsqu'une composante 5, 6 de l'airbag 4 est rangée dans le siège 1, les deux sangles 8, 9 sont superposées et comprennent un point de fixation haut à une zone supérieure 12 et centrale de la structure de dossier 3, ainsi qu'un point de fixation bas à une zone centrale 13 d'une bosse anti sous-marinage 14 de l'assise 2. Le sac gonflable 7 est inséré dans un côté du dossier 3, de façon à ne pas être visible depuis l'extérieur dudit siège 1. Les deux sangles superposées 8, 9 s'étendent entre leur point de fixation haut et leur point de fixation bas, en passant sur les côtés du dossier 3 et sur les côtés de l'assise 2 sans jamais être visibles depuis l'extérieur dudit siège 1.

En se référant à la figure 2, dans le cas d'un choc accidentel du véhicule contre un obstacle extérieur pouvant par exemple être un autre véhicule, les deux composantes 5, 6 de l'airbag 4 se déploient simultanément vers l'avant comme l'indiquent les deux flèches 15, 16 pour venir encercler complètement un individu qui serait assis sur le siège 1. En effet, lors de ce déploiement les deux sacs 7 gonflés des deux composantes 5, 6 viennent en continuité l'un de l'autre pour former un bourrelet de protection continu autour de l'individu. Le déploiement de chaque composante 5, 6 de l'airbag 4 est provoqué par le gonflement du sac 7 gonflable et est guidé par les deux sangles 8, 9 qui sont cousues audit sac 7 et qui sont fixées à la fois à la structure de dossier 6 et à la structure d'assise 2. Lorsqu'une composante 5, 6 de l'airbag 4 se déploie le point de fixation haut et le point de fixation bas des deux sangles 8, 9 demeurent inchangés, et continuent de retenir lesdites deux sangles 8, 9. Une fois que l'individu aura été complètement entouré par les deux sacs gonflables 7 des deux composantes 5, 6 de l'airbag 4, il sera parfaitement protégé dans toutes les directions de l'espace.

Afin que les deux composantes 5, 6 de l'airbag 4 puissent parfaitement jouer leur rôle de protection, il est important de bien les intégrer dans le siège 1, de manière à ce qu'elles puissent se déployer de façon fluide et efficace dans la direction souhaitée, et sans interférer avec d'autres éléments dudit siège. En effet, il ne faut pas que l'intégration des deux composantes 5, 6 de l'airbag 4 dans le siège 1 empêche par exemple le fonctionnement d'une ceinture de sécurité, ou que des éléments dudit siège 1 puissent nuire au déploiement desdites composantes 5, 6.

Un siège 1 selon l'invention possède une assise 2 spécialement configurée pour intégrer les deux composantes 5, 6 de l'airbag 4. La structure d'assise 2 est schématiquement délimitée par deux bords parallèles longitudinaux s'étendant suivant un axe longitudinal X du véhicule, et par deux bords parallèles transversaux s'étendant suivant un axe transversal Y dudit véhicule.

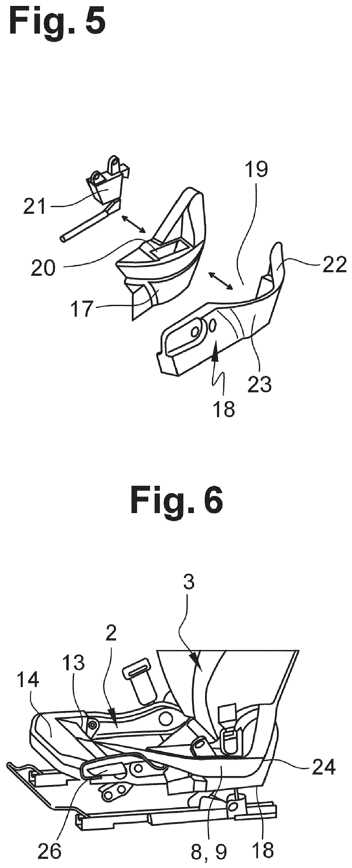

En se référant aux figures 4 et 5, chaque bord longitudinal de la structure d'assise 2 est matérialisé par un carter interne 17 et par un carter externe 18. Le carter interne 17 et le carter externe 18 sont des pièces de faible épaisseur s'inscrivant dans un plan sensiblement vertical et longitudinal XZ du véhicule. Suivant un axe transversal Y du véhicule, les deux carters externes 18 représentent les deux pièces les plus extérieures de l'assise 2, chaque carter interne 17 étant inséré entre un carter externe 18 et une zone centrale de l'assise 2 sur laquelle est destiné à venir s'asseoir un individu. Le carter externe 18 est allongé le long d'un axe longitudinal X du véhicule, et présente une zone creuse 19, le carter interne 17 ayant une longueur inférieure à celle du carter externe 18, la longueur étant sa dimension considérée le long d'un axe longitudinal X du véhicule. Le carter interne 17 présente une courbure et est destiné à venir au contact de la paroi du carter externe 18 délimitant la zone creuse 19.

En se référant aux figures 4 et 6, le carter interne 17 une fois qu'il a été plaqué contre une surface intérieure du carter externe 18, ménage avec ledit carter externe 18 un passage dans lequel passe les deux sangles superposées 8, 9 de la composante 5, 6 de l'airbag 4 correspondante. Le carter interne 17 comprend une ouverture 20 destinée à recevoir un boitier 21 spécifique pour loger, soit un brin de boucle de ceinture de sécurité, soit un ancrage de ladite ceinture de sécurité. De cette manière, les deux sangles 8, 9 superposées de l'airbag 4 en passant entre le carter interne 17 et le carter externe 18 sont extérieures audit brin de boucle de ceinture de sécurité et ne risquent donc pas d'interférer avec la ceinture de sécurité. De même, ladite ceinture de sécurité n'empêchera pas les deux sangles superposées 8, 9 de l'airbag 4 de se déployer lors d'un choc du véhicule contre un obstacle extérieur.

En se référant aux figures 1, 4, 5 et 8, le carter externe 18 présente un segment d'extrémité 22 s'étendant perpendiculairement à un corps principal 23 dudit carter, ledit segment d'extrémité 22 se retrouvant dans la continuité du dossier 3 et étant destiné à masquer les deux sangles superposées 8, 9 de l'airbag 4, entre ledit dossier 3 et l'assise 2 du siège 1.

Comme le montre les figures 3 et 6, entre le dossier 3 et l'assise 2, les deux sangles superposées 8, 9 de l'airbag 4 présente une pliure 24 à sensiblement 90°, c'est-à-dire à 90° plus ou moins 10°. Cette pliure préalable à 90° est nécessaire pour justement empêcher l'apparition d'une pliure qui pourrait s'avérer dangereuse lors du déploiement des deux sangles superposées 8, 9 de l'airbag 4. En effet, les conditions de déploiement des deux sangles superposées 8, 9 de l'airbag 4 dans le siège 1 sont telles que la pliure préalable de 90° va disparaitre, pour laisser place à des sangles 8, 9 d'airbag lisses et uniformes, et donc dépourvues de la moindre pliure, comme illustré à la figure 2.

En se référant à la figure 3, comme la plupart des dossiers des sièges de véhicule existants, le dossier 3 d'un siège 1 selon l'invention est réglable en inclinaison. Il est monté mobile en rotation autour d'un axe de rotation 25 s'étendant suivant un axe transversal Y du véhicule et placé dans une zone inférieure de la structure de dossier 3. Lors de leur passage sur les côtés du dossier 3 et sur les côtés de l'assise 2 les deux sangles superposées 8, 9 d'une composante 5, 6 de l'airbag 4 passe par cet axe de rotation 25. Autrement dit, si on prolongeait artificiellement ledit axe de rotation 25 de chaque côté, les deux sangles superposées 8, 9 de l'airbag 4 traverseraient les prolongements artificiels dudit axe de rotation 25. De cette manière, en passant par l'axe de rotation 25 du dossier 3, les deux sangles superposées 8, 9 de l'airbag 4 n'empêchent pas une mise en rotation dudit dossier 3 autour dudit axe 25 pour régler son inclinaison. En revanche, les deux sangles 8, 9 superposées de l'airbag 4 recouvrent un mécanisme de mise en rotation et de positionnement du dossier 3 habituellement placé dans le prolongement de l'axe de rotation 25 du dossier 3, empêchant toute manipulation de ce mécanisme.

En se référant aux figures 3, 4 et 8 afin de remédier à cet empêchement, un élément de commande 26 de ce mécanisme 27 a été créé, puis placé dans une zone avant de l'un des deux carters externes 18 de l'assise 2 du siège 1. Cet élément de commande est constitué par une poignée 26 s'étendant par défaut suivant un axe longitudinal X et horizontal du véhicule, ladite poignée 26 reliant le mécanisme 27 de mise en rotation et de positionnement du dossier 3 au moyen d'un fil 28. Ce fil 28 est caché par le carter externe 18, et une mise en rotation manuelle de la poignée de commande 26 exerce une tension sur le fil 28 qui agit directement sur le mécanisme 27 afin de pouvoir régler l'inclinaison du dossier 3.

De même, les deux sangles superposées 8, 9 de l'airbag 4 recouvrent un mécanisme de surélévation de l'assise 2 et empêchent tout réglage en hauteur de ladite assise 2.

En se référant aux figures 1, 3 et 4, ce problème d'accès au mécanisme de surélévation de l'assise 2 a été réglé en adjoignant à ce mécanisme un moteur électrique et en associant à ce moteur électrique un bouton de commande 29. Ce bouton de commande est un bouton poussoir 29 qui est fixé dans le carter externe 18 supportant la poignée 26 de commande, ledit bouton-poussoir 29 étant placé derrière ladite poignée 26.

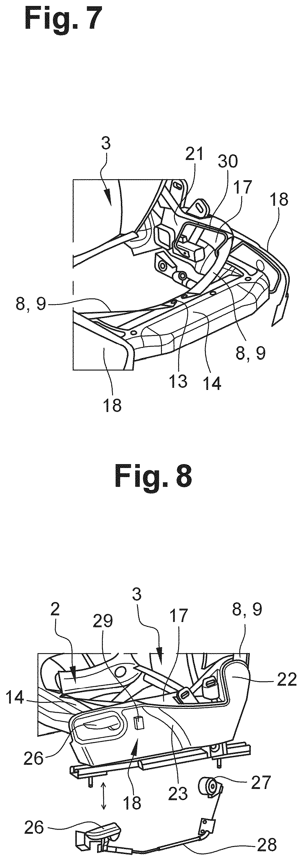

En se référant à la figure 7, un fil rigide 30 de renvoi d'angle est fixé à la structure d'assise 2 à l'intérieur d'un carter interne 17, de manière à améliorer le positionnement des deux sangles superposées 8, 9 de l'airbag 4 dans le passage situé entre le carter interne 17 et le carter externe 18. En effet, les deux sangles superposées 8, 9 de l'airbag 4 passent autour de ce fil rigide 30 en venant en appui contre celui-ci, pour former un coude, ledit fil rigide 30 redressant les deux sangles 8,9 superposées de l'airbag afin qu'elles s'insèrent de façon optimisée dans le passage créé entre le carter interne 17 et le carter externe 18. Autrement dit, ce fil rigide 30 prolonge la rectitude des deux sangles superposées 8, 9 de l'airbag 4 dans le passage situé entre le carter interne 17 et le carter externe 18.

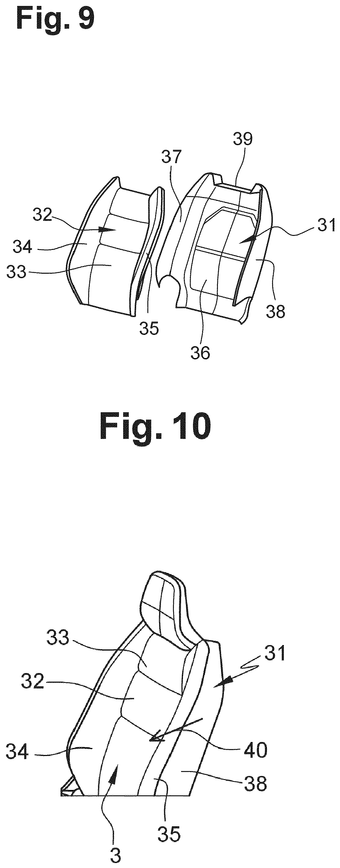

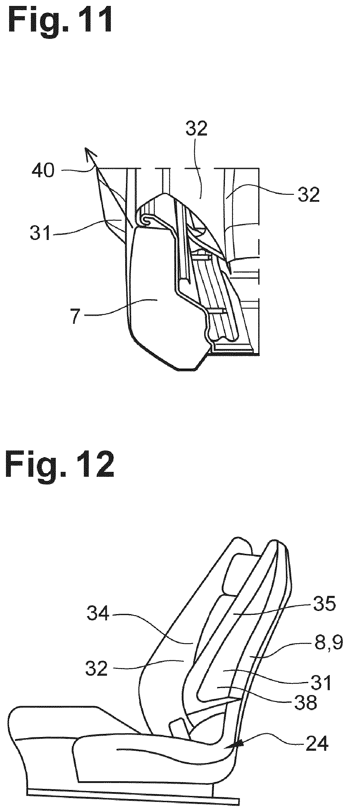

En se référant aux figures 9, 10, 11, 12 et 13 le sac gonflable 7 ainsi qu'un tronçon des sangles superposées 8, 9 cousues audit sac 7 sont placés dans le dossier 3 du siège 1. Les habillages du dossier 3 ont été modifiés pour permettre de libérer rapidement les deux sangles superposées 8, 9 et le sac 7 dans la direction voulue, c'est-à-dire vers l'avant du siège 1, pour englober le passager et éviter un contact avec la zone du pied milieu de la caisse du véhicule. Pour parvenir à ce résultat, une coque arrière rigide 31 est plaquée contre un coussin 32 comprenant la matelassure du dossier 3 constituée de mousse, et un textile enveloppant ladite mousse. Ce coussin 32 comprend une paroi principale 33 prolongée vers l'avant par deux bords latéraux 34, 35 parallèles. La coque 31 présente une paroi principale 36 prolongée vers l'avant par deux bords latéraux 37, 38 parallèles et par un bord supérieur 39. Ces deux bords latéraux 34, 35 sont sensiblement perpendiculaires à la paroi principale 36, le bord supérieur 39 prolongeant ladite paroi principale 36 en étant incliné par rapport à celle-ci. La coque 31 vient se plaquer contre le coussin 32 du dossier 3 de sorte que :
- sa paroi principale 36 vienne se plaquer contre la surface principale 33 du coussin 32 et à l'arrière de celle-ci,
- ses deux bords latéraux 37, 38 viennent enserrer les deux bords latéraux 34, 35 du coussin 32 en emprisonnant les deux sangles 8, 9 superposées de chaque composante 5, 6 de l'airbag 4. A ce sujet, la figure 12 peut-être trompeuse car malgré la présence des deux bords latéraux 37, 38 de la coque 31 on arrive quand même à visualiser les deux sangles superposée 8, 9 d'une composante 5, 6 de l'airbag 4. Pour lever toute ambiguïté, il est supposé que sur la figure 12, lesdites sangles 8, 9 sont visualisées par transparence à travers un montant latéral 37, 38 de la coque 31. Le sac gonflable 7 ainsi que les deux sangles superposées 8, 9 de chaque composante 5, 6 de l'airbag 4, sont logés entre un bord latéral 34, 35 du coussin 32 et un bord latéral 37, 38 de la coque 31. Les sangles superposées 8, 9 sont cousues sur un flanc extérieur du sac 7 et sont donc les premières à s'extraire du dossier 3, même si elles sont liées au sac 7, dans le cas d'un choc du véhicule contre un obstacle extérieur.

Grâce à la configuration particulière de la coque 31 et au placement judicieux du sac gonflable 7 et des deux sangles superposées 8, 9 entre un bord latéral 34, 35 du coussin 32 et un bord latéral 37, 38 de ladite coque 31, le déploiement dudit sac 7 et desdites deux sangles superposées 8, 9 va s'effectuer vers l'avant du dossier 3 comme cela est matérialisé par la flèche 40 apparaissant aux figures 10 et 11. Un tel arrangement de ces différents éléments empêche tout déploiement transversal, c'est-à-dire le long d'un axe transversal Y du véhicule, du sac gonflable 7 et des deux sangles 8, 9 superposées associées.

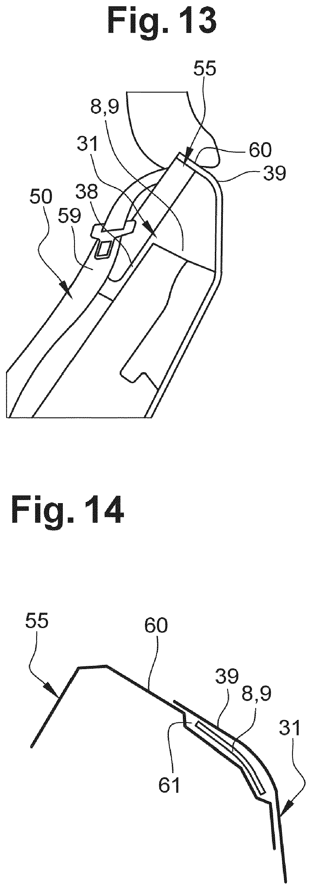

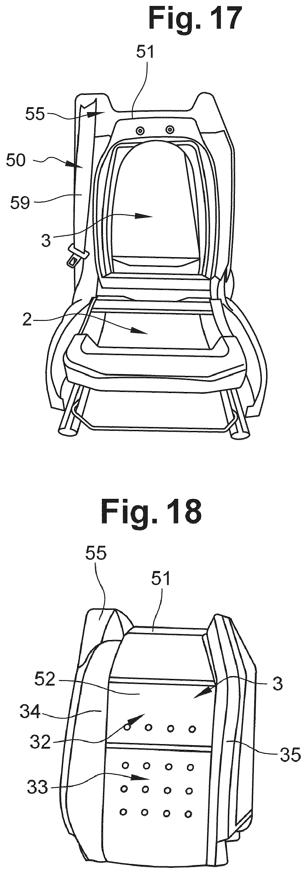

En se référant aux figures 13 à 20, une deuxième particularité d'un siège 1 selon l'invention outre le fait qu'il intègre entièrement deux composantes 5, 6 performantes d'un airbag 4, est qu'il intègre entièrement une ceinture de sécurité 50. En effet, une ceinture de sécurité d'un siège passager ou d'un siège conducteur comprend habituellement un point de fixation à un pied milieu d'un côté de caisse. Pour la réalisation d'un siège 1 de véhicule selon l'invention, ce point de fixation a été transféré dans une zone supérieure et excentrée 51 de la structure de dossier 3.

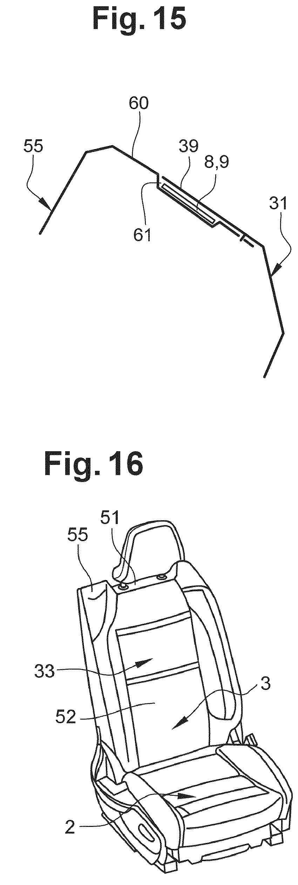

En se référant aux figures 16, 17, et 18, le dossier 3 d'un siège 1 selon l'invention comprend une surface avant principale 52 appartenant à la paroi principale 33 du coussin 32 et contre laquelle est destinée à venir en appui le dos d'un occupant qui serait assis sur ledit siège 1, et les deux montants latéraux 34, 35 dudit coussin 32 bordant ladite surface principale 52 en étant légèrement inclinés par rapport à celle-ci. Il est à noter que ces deux montants latéraux 34, 35 désignent les deux bords latéraux 34, 35 du coussin 32 introduits avant. De cette manière, ces deux montants latéraux 34, 35 sont destinés à maintenir latéralement le dos de cet occupant. Lors de la fabrication de ce siège, l'un des deux montants latéraux 34, 35 a été raccourci pour pouvoir intégrer un carter avant creux 55 à une extrémité de ce montant latéral 34, 35, de sorte que la longueur totale du montant latéral raccourci 34, 35 et du carter avant 55 creux soit égale à la longueur totale de l'autre montant latéral 34, 35.

En se référant aux figures 16, 17 et 18, le carter 55 avant creux se retrouve ainsi dans la zone supérieure 51 de la structure de dossier 3, en étant déporté par rapport à la surface avant principale 52. Pour des raisons d'esthétisme, le carter avant 55 creux constitue une prolongation idéale du montant latéral 34, 35 raccourci à l'extrémité duquel il a été fixé, de sorte que la géométrie globale de l'ensemble constitué par ledit montant latéral raccourci 34, 35 et ledit carter 55, est identique à la forme de l'autre montant latéral 34, 35. Il en résulte que le dossier 3 du siège 1 présente une parfaite symétrie par rapport à ces deux montants latéraux 34, 35. Préférentiellement, le carter avant 55 a une forme arrondie ne présentant aucune arête saillante afin de ne pas blesser un occupant du véhicule, ni dégrader l'esthétique du siège 1.

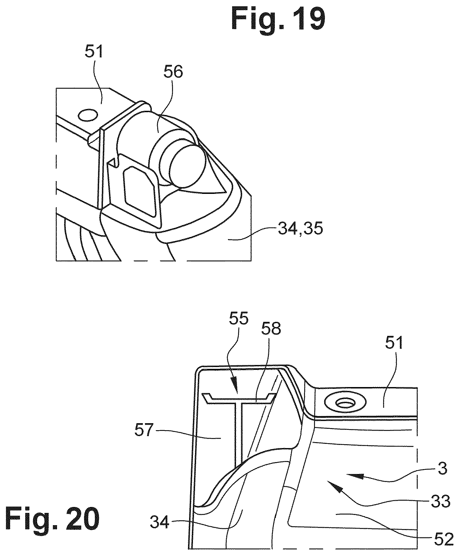

En se référant à la figure 19, le carter avant creux 55 délimite un logement qui est destiné à loger un enrouleur électrique 56 de la ceinture de sécurité 50, et matérialise ainsi le transfert du point de fixation de ladite ceinture de sécurité 50 qui a lieu sur le pied milieu de certains véhicules plus classiques. Cet enrouleur 56 est fixé à la structure du dossier 3.

En se référant aux figures 16, 17, 18 et 20, le carter avant 55 présente une face avant 57 dotée d'une ouverture sous la forme d'une croix comprenant une fente 58 et une fente secondaire verticale, ladite fente 58 étant destinée à faire passer un brin 59 de la ceinture de sécurité 50, qui est enroulé autour de l'enrouleur électrique 56 placé dans le carter 55 avant. La fente 58 est sensiblement rectiligne et s'étend préférentiellement dans une direction horizontale. La fente secondaire verticale débouche dans la fente 58 horizontale, et permet d'insérer la ceinture de sécurité dans le carter 55 avant. Le brin 59 de la ceinture de sécurité 50 a une largeur qui est inférieure à la longueur de la fente 58, et peut ainsi émerger de ladite fente 58 en limitant les jeux avec celle-ci, de manière à stabiliser la position du brin 59 émergeant du carter 55 creux et donc à faciliter une manipulation de la ceinture de sécurité 50, 59. Grâce à la présence de la fente 58, le brin 59 de la ceinture de sécurité va pouvoir descendre le long d'un montant latéral 34, 35 du dossier 3, sans jamais interférer avec les sangles 8, 9 superposées d'une composante 5, 6 de l'airbag 4 passant entre l'un desdits montants latéraux 34, 35 du coussin 32 et un bord latéral 37, 38 de la coque 31.

En se référant aux figures 13, 14, 15, le bord supérieur 39 de la coque 31 vient se placer au-dessus et au contact d'une paroi supérieure 60 du carter creux 55 logeant l'enrouleur électrique 56 de la ceinture de sécurité 50. Ce bord supérieur 39 délimite avec le carter avant creux 55 le logement dans lequel est positionné l'enrouleur 56. Cette paroi supérieure 60 comprend une rainure 61 destinée au passage des deux sangles 8, 9 superposées, de l'une des deux composantes 5, 6 de l'airbag 4. La largeur de cette rainure 61 est légèrement supérieure à la largeur desdites deux sangles 8, 9 superposées 8, 9, de manière à permettre à celles-ci de venir se loger dans la rainure 61 sans engendrer de jeux significatifs. Le bord supérieur 39 de la coque 31 est suffisamment allongé pour pouvoir tout juste recouvrir entièrement cette rainure 61, masquant ainsi la présence des deux sangles superposées 8, 9 dans ladite rainure 61. Ce bord supérieur 39 de la coque 31, en recouvrant au plus juste cette rainure 61, va permettre auxdites deux sangles 8, 9 superposées logées dans ladite rainure 61, de sortir de ladite rainure 61 avant d'être expulsées vers l'avant du dossier 3 lors d'un choc accidentel du véhicule contre un obstacle extérieur. En effet, lors d'un tel choc, le sac gonflable 7 de chaque composante 5, 6 de l'airbag 4 va se gonfler en sortant du dossier 3 vers l'avant, entrainant avec lui les deux sangles superposées 8, 9 qui sont cousues audit sac 7. Les deux sangles 8, 9 initialement superposées vont se déployer vers l'avant du dossier 3 en se séparant, sous l'influence du sac 7 qui se gonfle. Pour résumer, la coque 31 ajoutée au dossier 3 permet aux sangles 8, 9 cousues au sac 7, de pouvoir sortir vers l'avant des deux côtés du dossier 3 et de pouvoir sortir vers l'avant dans la zone supérieure 51 dudit dossier 3.

Un siège de véhicule selon l'invention 1 a donc la double particularité de :
- posséder un airbag 4 sous la forme de deux composantes 5, 6 comportant chacune au moins deux sangles 8, 9 et un sac gonflable 7 sur lequel sont cousues lesdites sangles 8, 9. De cette manière, dans le cas d'un choc du véhicule contre un obstacle extérieur, les deux composantes 5, 6 de l'airbag se déploient vers l'avant en étant guidées par les sangles 8, 9, de sorte que les deux sac gonflables 7 une fois déployés, forment un bourrelet continu enveloppant totalement une personne qui serait assise sur le siège 1. Grâce à la présence de ce bourrelet continu, cette personne sera protégée avec un niveau de sécurité maximal. Il est à noter que l'airbag 4 est complètement intégré dans le siège 1,
- d'intégrer entièrement une ceinture de sécurité 50 possédant un enrouleur électrique 56 logé dans un carter 55 placé dans une zone supérieure 51 et excentrée du dossier 3.

Le siège 1 est conçu de sorte que la ceinture de sécurité 50 n'entrave pas un potentiel déploiement des deux composantes 5, 6 de l'airbag 4 dans le cas d'un choc du véhicule contre un obstacle extérieur, et de sorte que les sangles 8, 9 de l'airbag 4 ne gênent pas l'utilisation et le fonctionnement de la ceinture de sécurité 50. Un tel siège intègre un système de protection complet et autonome à travers la présence des deux composantes 5, 6 de l'airbag et de la ceinture de sécurité 50, permettant d'assurer une protection maximale à une personne qui serait assise sur ledit siège et ce, quels que soient le positionnement et l'orientation de ce siège 1 au sein du véhicule.

## Revendications

1. Siège (1) de véhicule comprenant une structure de dossier (3), une structure d'assise (2) possédant une bosse anti sous-marinage (14), et un airbag (4) possédant deux composantes (5, 6) placées sur les côtés (10, 11) dudit siège (1) de part et d'autre d'un individu qui serait assis sur celui-ci, siège dans lequel :
- chaque composante (5, 6) de l'airbag (4) comprend un sac (7) gonflable et au moins une sangle (8, 9) cousue audit sac (7), ladite composante (5, 6) étant apte à se déployer vers l'avant du siège dans le cas d'un choc du véhicule, de sorte que lesdites composantes (5, 6) soient amenées à entourer complètement l'individu,
- ladite au moins une sangle (8, 9) de chaque composante (5, 6) présente un point de fixation haut à une zone supérieure (12) de la structure de dossier (3) et un point de fixation bas à la bosse anti sous-marinage (13, 14) de la structure d'assise (2), et ladite au moins une sangle (8, 9) de chaque composante (5, 6) cheminant le long d'un côté de la structure de dossier (3) et le long d'un côté de la structure d'assise (2), **caractérise en ce que**:
- la structure de dossier (3) comprend un coussin (32) et une coque rigide (31) enserrant ledit coussin (32) en étant ouverte sur l'avant, de sorte que ladite au moins une sangle (8, 9) de chaque composante (5, 6) passe sur un côté de la structure de dossier (3) entre ledit coussin (32) et ladite coque rigide (31), le siège comprenant une ceinture de sécurité (50) entièrement intégrée à celui-ci et dotée d'un enrouleur (56) fixé sur la structure du dossier 3 et placé à l'intérieur d'un logement délimité par un carter (55) avant situé dans une zone supérieure (51) de ladite structure de dossier (3), la coque rigide (31, 39) recouvrant au moins partiellement ledit carter (55) avant en ménageant entre eux un espace (61) pour permettre le passage de la dite au moins une sangle (8, 9) de l'une des deux composantes (5, 6) dans la zone supérieure (51) de la structure de dossier (3), ladite coque (31, 39) délimitant à l'arrière ledit logement.

2. Siège de véhicule selon la revendication 1, **caractérisé en ce que** la coque (31) comprend une paroi arrière (36) destinée à venir se placer contre une surface arrière du coussin (32), deux bords latéraux (37, 38) destinés à venir se placer contre deux bords latéraux (34, 35) du coussin (32) en enserrant ladite au moins une sangle (8, 9) de chaque composante (5, 6) et un bord supérieur (39) destiné à venir se placer sur le carter avant (55) enfermant l'enrouleur (56) de la ceinture de sécurité (50) créant un passage (61) pour ladite au moins une sangle (8, 9) de l'une des deux composantes (5, 6) dans la zone supérieure (51) de la structure de dossier (3).

3. Siège de véhicule selon l'une quelconque des revendications 1 ou 2, **caractérisé en ce que** le carter (55, 60) de ceinture de sécurité (50) comprend une rainure (61) destinée au passage de ladite au moins une sangle (8, 9) de l'une des deux composantes (5, 6), et **en ce que** la coque (31) comprend un segment plan (39) recouvrant ladite rainure (61) dans laquelle est placée ladite au moins une sangle (8, 9).

4. Siège selon la revendication 3, **caractérisé en ce que** la largeur de la rainure (61) est légèrement supérieure à celle de ladite au moins une sangle (8, 9) de sorte que ladite au moins une sangle (8, 9) est placée dans ladite rainure (61) en induisant un minimum de jeu.

5. Siège selon l'une quelconque des revendications 1 à 4, **caractérisé en ce que** le dossier (3) comprend une surface principale (52) contre laquelle est destinée à venir en appui le dos d'un occupant, et deux montants latéraux (34, 35) bordant ladite surface principale (52) et destinés à maintenir latéralement le dos de cet occupant, et **en ce que** le carter avant (55) se situe dans une zone supérieure de l'un des deux montants latéraux (34, 35).

6. Siège de véhicule selon la revendication 5, **caractérisé en ce que** le montant latéral (34, 35) dans lequel est situé le carter avant (55) a été préalablement raccourci de sorte que la longueur totale dudit montant (34, 35) et dudit carter avant (55) est égale à la longueur totale de l'autre montant (34, 35).

7. Siège de véhicule selon l'une quelconque des revendication 1 à 3, **caractérisé en ce que** le carter avant (55) possède une face avant (57), et **en ce que** ladite face avant (57) comporte une ouverture (58) pour permettre à un brin (59) de la ceinture de sécurité (50) de sortir dudit carter avant (55) vers l'avant.

8. Siège de véhicule selon la revendication 7, **caractérisé en ce que** l'ouverture se présente sous la forme d'une croix, comprenant une fente (58) dont la longueur est supérieure à la largeur du brin (59) de ceinture de sécurité émergeant du carter avant (55) pour permettre audit brin (59) d'émerger de ladite fente (58).

9. Siège de véhicule selon l'une quelconque des revendications 1 à 8, **caractérisé en ce que** le carter avant (55) est fermé de sorte que l'enrouleur motorisé (56) de la ceinture de sécurité (50) ne soit pas visible depuis l'extérieur du siège (1).

10. Véhicule comprenant au moins un siège conforme à l'une quelconque des revendications 1 à 9.

## Patentansprüche

1. Fahrzeugsitz (1), welcher eine Rückenlehnenstruktur (3), eine Sitzteilstruktur (2), die einen Anti-Submarining-Hügel (14) besitzt, und einen Airbag (4), der zwei an den Seiten (10, 11) des Sitzes (1) beiderseits einer auf diesem sitzenden Person angeordnete Komponenten (5, 6) besitzt, umfasst, wobei in dem Sitz:
- jede Komponente (5, 6) des Airbags (4) einen aufblasbaren Sack (7) und mindestens einen an den Sack (7) angenähten Gurt (8, 9) besitzt, wobei die Komponente (5, 6) geeignet ist, sich im Falle eines Aufpralls des Fahrzeugs zur Vorderseite des Sitzes hin zu entfalten, derart, dass bewirkt wird, dass die Komponenten (5, 6) die Person vollständig umgeben,
- der mindestens eine Gurt (8, 9) jeder Komponente (5, 6) einen oberen Befestigungspunkt an einem oberen Bereich (12) der Rückenlehnenstruktur (3) und einen unteren Befestigungspunkt am Anti-Submarining-Hügel (13, 14) der Sitzteilstruktur (2) aufweist, und wobei der mindestens eine Gurt (8, 9) jeder Komponente (5, 6) entlang einer Seite der Rückenlehnenstruktur (3) und entlang einer Seite der Sitzteilstruktur (2) verläuft, **dadurch gekennzeichnet, dass**:
- die Rückenlehnenstruktur (3) ein Polsterkissen (32) und eine starre Schale (31), die das Polsterkissen (32) umschließt, wobei sie an der Vorderseite offen ist, umfasst, derart, dass der mindestens eine Gurt (8, 9) jeder Komponente (5, 6) auf einer Seite der Rückenlehnenstruktur (3) zwischen dem Polsterkissen (32) und der starren Schale (31) hindurch verläuft, wobei der Sitz einen Sicherheitsgurt (50) umfasst, der vollständig in diesen integriert ist und mit einem Aufroller (56) ausgestattet ist, der an der Struktur der Rückenlehne 3 befestigt und im Inneren einer Aufnahme angeordnet ist, die von einem vorderen Gehäuse (55) begrenzt wird, das sich in einem oberen Bereich (51) der Rückenlehnenstruktur (3) befindet, wobei die starre Schale (31, 39) das vordere Gehäuse (55) wenigstens teilweise bedeckt und dabei dazwischen einen Zwischenraum (61) bildet, um den Durchgang des mindestens einen Gurtes (8, 9) einer der zwei Komponenten (5, 6) im oberen Bereich (51) der Rückenlehnenstruktur (3) zu ermöglichen, wobei die Schale (31, 39) die Aufnahme hinten begrenzt.

2. Fahrzeugsitz nach Anspruch 1, **dadurch gekennzeichnet, dass** die Schale (31) eine hintere Wand (36) umfasst, die dazu bestimmt ist, an eine hintere Fläche des Polsterkissens (32) angelegt zu werden, zwei seitliche Ränder (37, 38), die dazu bestimmt sind, an zwei seitliche Ränder (34, 35) des Polsterkissens (32) angelegt zu werden und dabei den mindestens einen Gurt (8, 9) jeder Komponente (5, 6) zu umschließen, und einen oberen Rand (39), der dazu bestimmt ist, auf dem vorderen Gehäuse (55), das den Aufroller (56) des Sicherheitsgurtes (50) umschließt, angeordnet zu werden, wobei ein Durchgang (61) für den mindestens einen Gurt (8, 9) einer der zwei Komponenten (5, 6) im oberen Bereich (51) der Rückenlehnenstruktur (3) erzeugt wird.

3. Fahrzeugsitz nach einem der Ansprüche 1 oder 2, **dadurch gekennzeichnet, dass** das Gehäuse (55, 60) des Sicherheitsgurtes (50) eine Nut (61) umfasst, die für den Durchgang des mindestens einen Gurtes (8, 9) einer der zwei Komponenten (5, 6) bestimmt ist, und dadurch, dass des Schale (31) ein ebenes Segment (39) umfasst, das die Nut (61) bedeckt, in welcher der mindestens eine Gurt (8, 9) angeordnet ist.

4. Sitz nach Anspruch 3, **dadurch gekennzeichnet, dass** die Breite der Nut (61) etwas größer als diejenige des mindestens einen Gurtes (8, 9) ist, so dass der mindestens eine Gurt (8, 9) in der Nut (61) angeordnet ist und dabei ein minimales Spiel hervorruft.

5. Sitz nach einem der Ansprüche 1 bis 4, **dadurch gekennzeichnet, dass** die Rückenlehne (3) eine Hauptfläche (52) umfasst, die dazu bestimmt ist, dass sich der Rücken eines Insassen an sie anlehnt, und zwei seitliche Schenkel (34, 35), welche die Hauptfläche (52) umranden und dazu bestimmt sind, den Rücken dieses Insassen seitlich zu halten, und dadurch, dass sich das vordere Gehäuse (55) in einem oberen Bereich eines der zwei seitlichen Schenkel (34, 35) befindet.

6. Fahrzeugsitz nach Anspruch 5, **dadurch gekennzeichnet, dass** der seitliche Schenkel (34, 35), in dem sich das vordere Gehäuse (55) befindet, zuvor so verkürzt worden ist, dass die Gesamtlänge des Schenkels (34, 35) und des vorderen Gehäuses (55) gleich der Gesamtlänge des anderen Schenkels (34, 35) ist.

7. Fahrzeugsitz nach einem der Ansprüche 1 bis 3, **dadurch gekennzeichnet, dass** das vordere Gehäuse (55) eine Vorderseite (57) besitzt, und dadurch, dass die Vorderseite (57) eine Öffnung (58) aufweist, um zu ermöglichen, dass ein Trumm (59) des Sicherheitsgurtes (50) aus dem vorderen Gehäuse (55) nach vorn austritt.

8. Fahrzeugsitz nach Anspruch 7, **dadurch gekennzeichnet, dass** die Öffnung in der Form eines Kreuzes ausgebildet ist, das einen Schlitz (58) umfasst, dessen Länge größer als die Breite des Trumms (59) des Sicherheitsgurtes ist, das aus dem vorderen Gehäuse (55) austritt, um zu ermöglichen, dass das Trumm (59) aus dem Schlitz (58) austritt.

9. Fahrzeugsitz nach einem der Ansprüche 1 bis 8, **dadurch gekennzeichnet, dass** das vordere Gehäuse (55) geschlossen ist, so dass der motorisch angetriebene Aufroller (56) des Sicherheitsgurtes (50) von außerhalb des Sitzes (1) nicht sichtbar ist.

10. Fahrzeug, welches mindestens einen Sitz gemäß einem der Ansprüche 1 bis 9 umfasst.

## Claims

1. Vehicle seat (1) comprising a structure of a backrest (3), a structure of a seat pan (2) having an anti-submarining hump (14), and an airbag (4) having two components (5, 6) placed on the sides (10, 11) of said seat (1) on either side of an individual who would be seated thereon, in which seat:
- each component (5, 6) of the airbag (4) comprises an airbag cushion (7) and at least one strap (8, 9) sewn to said airbag cushion (7), said component (5, 6) being able to deploy towards the front of the seat in the event of an impact of the vehicle, such that said components (5, 6) are made to completely surround the individual,
- said at least one strap (8, 9) of each component (5, 6) has a top fixing point for fixing to an upper area (12) of the structure of the backrest (3) and a bottom fixing point for fixing to the anti-submarining hump (13, 14) of the structure of the seat pan (2), and said at least one strap (8, 9) of each component (5, 6) is routed along one side of the structure of the backrest (3) and along one side of the structure of the seat pan (2), **characterized in that**:
- the structure of the backrest (3) comprises a seat cushion (32) and a rigid shell (31) surrounding said seat cushion (32) and being open at the front, such that said at least one strap (8, 9) of each component (5, 6) passes on one side of the structure of the backrest (3) between said seat cushion (32) and said rigid shell (31), the seat comprising a seat belt (50) fully integrated therein and provided with a retractor (56) fixed to the structure of the backrest (3) and placed inside a receiving portion delimited by a front casing (55) located in an upper area (51) of said structure of the backrest (3), the rigid shell (31, 39) at least partially covering said front casing (55), thereby forming a space (61) between them to enable the passage of said at least one strap (8, 9) of one of the two components (5, 6) in the upper area (51) of the structure of the backrest (3), said shell (31, 39) delimiting said receiving portion to the rear.

2. Vehicle seat according to Claim 1, **characterized in that** the shell (31) comprises a rear wall (36) intended to be placed against a rear surface of the seat cushion (32), two lateral edges (37, 38) intended to be placed against two lateral edges (34, 35) of the seat cushion (32), thereby surrounding said at least one strap (8, 9) of each component (5, 6), and an upper edge (39) intended to be placed on the front casing (55) that encloses the retractor (56) for the seat belt (50), creating a passage (61) for said at least one strap (8, 9) of one of the two components (5, 6) in the upper area (51) of the structure of the backrest (3).

3. Vehicle seat according to either one of Claims 1 and 2, **characterized in that** the casing (55, 60) of the seat belt (50) comprises a groove (61) intended for the passage of said at least one strap (8, 9) of one of the two components (5, 6), and **in that** the shell (31) comprises a flat segment (39) covering said groove (61) in which said at least one strap (8, 9) is placed.

4. Seat according to Claim 3, **characterized in that** the width of the groove (61) is slightly greater than that of said at least one strap (8, 9) such that said at least one strap (8, 9) is placed in said groove (61) with a minimum of play.

5. Seat according to any one of Claims 1 to 4, **characterized in that** the backrest (3) comprises a main surface (52) against which an occupant's back is intended to rest, and two lateral uprights (34, 35) framing said main surface (52) and intended to laterally hold this occupant's back, and **in that** the front casing (55) is located in an upper area of one of the two lateral uprights (34, 35).

6. Vehicle seat according to Claim 5, **characterized in that** the lateral upright (34, 35) in which the front casing (55) is located was shortened beforehand such that the total length of said upright (34, 35) and said front casing (55) is equal to the total length of the other upright (34, 35).

7. Vehicle seat according to any one of Claims 1 to 3, **characterized in that** the front casing (55) has a front face (57), and **in that** said front face (57) has an opening (58) to allow a portion (59) of the seat belt (50) to exit said front casing (55) to the front.

8. Vehicle seat according to Claim 7, **characterized in that** the opening takes the shape of a cross, comprising a slot (58) of which the length is greater than the width of the seat belt portion (59) emerging from the front casing (55) to allow said portion (59) to emerge from said slot (58).

9. Vehicle seat according to any one of Claims 1 to 8, **characterized in that** the front casing (55) is closed such that the motorized retractor (56) for the seat belt (50) is not visible from outside the seat (1).

10. Vehicle comprising at least one seat according to any one of Claims 1 to 9.
